# EUROPEAN PATENT APPLICATION

(11) **EP 3 249 509 A1**
(43) Date of publication of application: **29.11.2017**
(21) Application number: 16197175.9
(22) Date of filing: 03.11.2016
(51) Int. Cl.: G06F 3/0481, H04N 5/445, H04N 21/431, G11B 27/34

(54) **METHOD AND DEVICE FOR PLAYING LIVE VIDEOS**

(30) Priority: 27.05.2016 CN 201610365891
(71) Applicant: Beijing Xiaomi Mobile Software Co., Ltd., Beijing 100085 (CN)
(72) Inventor: Liu, Shuo, Haidian District, Beijing 100085 (CN); Zhang, Xuhua, Haidian District, Beijing 100085 (CN); Yan, Shan, Haidian District, Beijing 100085 (CN)
(74) Representative: Grunert, Marcus

(57) **Abstract**

The present disclosure relates to a method and device for playing live videos. The method includes: when receiving a window switching instruction, switching (S101) from a live video window to a floating window to play a first live video; determining (S102) whether an instruction for playing a second live video is detected; and on the condition that the instruction for playing the second live video is detected, closing (S103) the floating window in which the first live video is being played. The device includes a switching module, a determination module and a closing module. The present disclosure can play live video in the floating window, without influencing users' other operations on a screen or page.

## Description

### TECHNICAL FIELD

The present invention generally relates to technologies for playing live videos, and more particularly, to a method and device for playing live videos.

### BACKGROUND

In related arts, people often use live video software in mobile phones to watch live videos. During the viewing of a live video, if a user exits from a live studio to seek other desired live videos, or to perform other operations, the previously played live video will stop immediately. The user needs to click again to continue the viewing of the live video. That is, the user cannot view live video contents while searching videos in a live video list, thereby resulting in bad user experience.

### SUMMARY

In order to address problems in related arts, embodiments of the present invention provide a method and device for playing live videos.

According to a first aspect of embodiments of the present invention, there is provided a method for playing live videos, including:
when receiving a window switching instruction, switching from a live video window to a floating window to play a first live video;
determining whether an instruction for playing a second live video is detected; and
on the condition that the instruction for playing the second live video is detected, closing the floating window in which the first live video is being played.

Optionally, an area of the floating window is smaller than an area of the live video window.

Optionally, the method may further include:
setting an operation interface on an area which is not covered by the floating window.

Optionally, the method may further include:
controlling the floating window to move within a preset area.

Optionally, after the floating window is closed, the method further includes:
playing the second live video in the live video window.

Optionally, the method may further include:
receiving a switching operation on the floating window; and
switching from the floating window to the live video window to play the first live video.

Optionally, the live video window is a full-screen live video window.

According to a second aspect of embodiments of the present invention, there is provided a device for playing live videos, including:
a switching module configured to, when a window switching instruction is received, switch from a live video window to a floating window to play a first live video;
a determination module configured to determine whether an instruction for playing a second live video is detected; and
a closing module configured to, on the condition that the instruction for playing the second live video is detected, close the floating window in which the first live video is being played.

Optionally, the switching module includes:
a floating window sub-module configured to set an area of the floating window as smaller than an area of the live video window.

Optionally, the device further includes:
an operation module configured to set an operation interface on an area which is not covered by the floating window.

Optionally, the device further includes:
a control module configured to control the floating window to move within a preset area.

Optionally, the device further includes:
a play module configured to play the second live video in the live video window.

Optionally, the switching module includes:
a first switching sub-module configured to receive a switching operation on the floating window, and switch from the floating window to the live video window to play the first live video.

Optionally, the switching module includes:
a second switching sub-module configured to, when the window switching instruction is received, switch from the live video window which is a full-screen window to the floating window to play the first live video.

According to a third aspect of embodiments of the present invention, there is provided a device for playing live videos, including:
a processor; and
a memory for storing instructions executable by the processor;
wherein the processor is configured to:
when receiving a window switching instruction, switch from a live video window to a floating window to play a first live video;
determine whether an instruction for playing a second live video is detected; and
on the condition that the instruction for playing the second live video is detected, close the floating window in which the first live video is being played.

According to a fourth aspect of embodiments of the present invention, there is provided a computer program which, when being executed on a processor of a terminal, performs any one of the above methods according to the present invention.

The technical solutions provided by embodiments of the present invention may have the following advantageous effects:
The technical solutions of the present invention switch playing of a live video to a floating window to play the live video, and the playing of the live video in the current floating window stops only if a user selects to play another live video. Thus, while viewing the live video in the floating window, the user can perform other operations irrelevant to the live video on a page outside the floating window, and thus user experience is greatly improved.

It is to be understood that both the foregoing general description and the following detailed description are exemplary and explanatory only and are not restrictive of the application, as claimed.

### BRIEF DESCRIPTION OF THE DRAWINGS

The accompanying drawings, which are incorporated in and constitute a part of this specification, illustrate embodiments consistent with the application and, together with the description, serve to explain the principles of the application.
FIG. 1 is a flow chart of a method for playing live videos according to an exemplary embodiment.
FIG. 2 is a flow chart of a method for playing live videos according to an exemplary embodiment.
FIG. 3 is a flow chart of a method for playing live videos according to an exemplary embodiment.
FIG. 4 is a flow chart of a method for playing live videos according to an exemplary embodiment.
FIG. 5 is a flow chart of a method for playing live videos according to an exemplary embodiment.
FIG. 6 is a block diagram of a device for playing live videos according to an exemplary embodiment.
FIG. 7 is a block diagram of a switching module in a device for playing live videos according to an exemplary embodiment.
FIG. 8 is a block diagram of a device for playing live videos according to an exemplary embodiment.
FIG. 9 is a block diagram of a device for playing live videos according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the application. Instead, they are merely examples of apparatuses and methods consistent with aspects related to the application as recited in the appended claims.

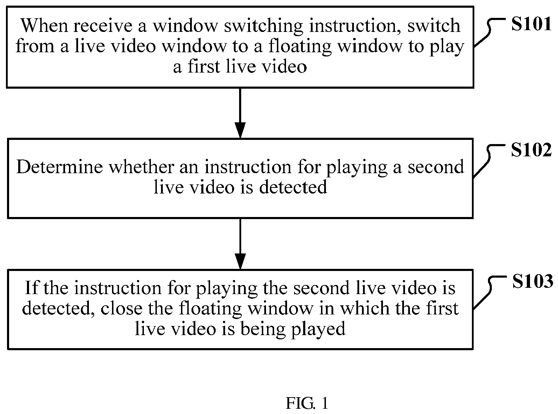

FIG. 1 is a flow chart of a method for playing live videos according to an exemplary embodiment. The method can be applied in a terminal or a system or program for controlling the terminal.

The method for playing live videos in the technical solutions of the present disclsoure is intended to meet people's requirements for performing other operations while viewing live videos, so as to enable people to perform other operations while viewing live videos. For example, when a user is viewing a live video, the live video which is being played in a live video window on the screen is an example of the first live video in embodiments of the present disclsoure. That is, the first live video is the video which is being viewed by the user. At this time, the user may view the video in a full-screen live video window, or in a live window covering a part of the area of the screen. At this time, if the user needs to perform other operations during the playing of the live video, for example, the user may need to find informaiton of other live videos, or need to interact with other users, the user may send a window switching instruction by clicking, for example. When the window switching instruction is received, the playing of the first live video is switched from the current live video window to a floating window, that is, the first live video is played in the floating window.

As shown in FIG. 1, the method for playing live videos provided by an embodiment of the present disclosure can include the following steps S101 to S103.

In S101, when a window switching instruction is received, playing of the first live video is switched from a live video window to a floating window.

In an embodiment, the floating window may be displayed as floating on a screen or page. The floating window is provided on the screen or page. For example, if the previously displayed screen or page is a page for selecting live studios, the floating window may be floating on the page and covering a part of the area of the page, without influencing the normal operations and display of the page. The user can continue to perform related operations on the page, and the first live video in the floating window is not influenced. The area of the floating window is usually smaller than the area of the screen or the page, that is, smaller than the area of the live video window. For example, the area of the floating window may be one second or less of the area of the screen or page, and the area of the floating window can be adjusted according to actual requirements.

In S102, whether an instruction for playing a second live video is detected is determined.

In an embodiment, when the first live video is played in the floating window, whether an instruction for playing a second live video is received can be monitored in real time. That is, when the user is viewing the live video in the floating window, he/she can perform operations irrelevant to the live video. If the user's operation is clicking another live video, i.e., the second live video, an instruction for playing the second live video is generated.

In S103, on the condition that the instruction for playing the second live video is detected, the floating window in which the first live video is being played can be closed.

In an embodiment, when the instruction for playing the second live video is detected, the floating window in which the first live video is currently being played can be closed.

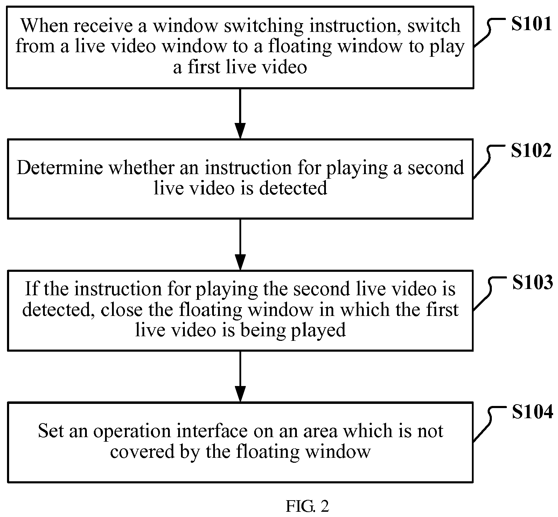

In an embodiment, as shown in FIG. 2, the above method for playing live videos can further include the following steps.

In S104, an operation interface is set on an area which is not covered by the floating window.

Because of the coverage of the floating window, the area which is covered by the floating window cannot display the contents of the screen or page, but this does not influence the operations on the screen or page. For the area of the screen or page which is not covered, the contents of the screen or page can be displayed normally. According to actual requirements of the screen or page, an operation interface can be set. That is, for the area of the screen or page outside the floating window, the user can perform operations on the screen or page normally, and the playing of the first live video is not influenced.

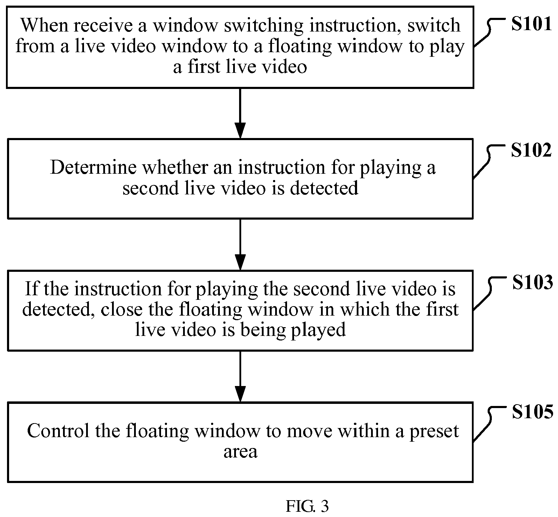

In an embodiment, as shown in FIG. 3, the above method for playing live videos can further include the following steps.

In S105, the floating window is controlled to move within a preset area.

The floating window can be movable, for example, the floating window can move on the screen or page according to user's requirements. For example, the user can set the position of the floating window on the screen or page according to his/her preference, and can adjust the position of the floating window at any time. Alternatively, the user can change the position of the floating window at any time by dragging, for example.

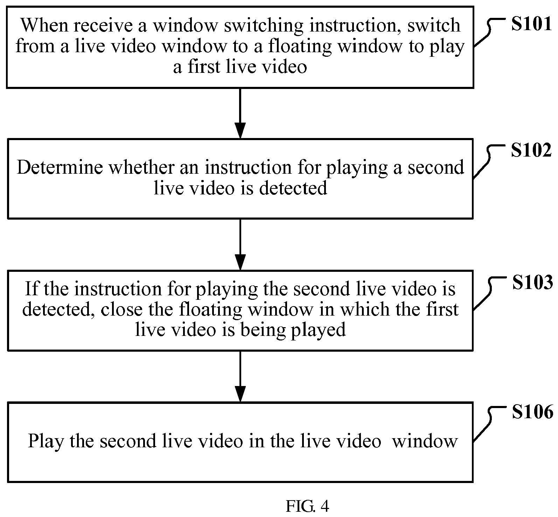

In an embodiment, as shown in FIG. 4, the above method for playing live videos can further include the following steps.

In S106, the second live video is played in the live video window.

After the floating window is closed, the second live video needs to be played. At this time, the playing can be performed in the live video window. For example, the second live video can be played in a full-screen live video window or in a live video window previously presented on the page. Specific playing of the second live video can be performed according to users' settings.

In an embodiment, when the user is viewing the first live video in the floating window, if the user finds a second live video which he/she wants to view immediately and selects to play the second live video, the selection of the second live video needs to be monitored, and the content of the second live video can be obtained. Then, the playing of the second live video can be started. At this time, by sending the instruction for playing the second live video, the floating window can be closed, and then the playing of the second live video is conducted.

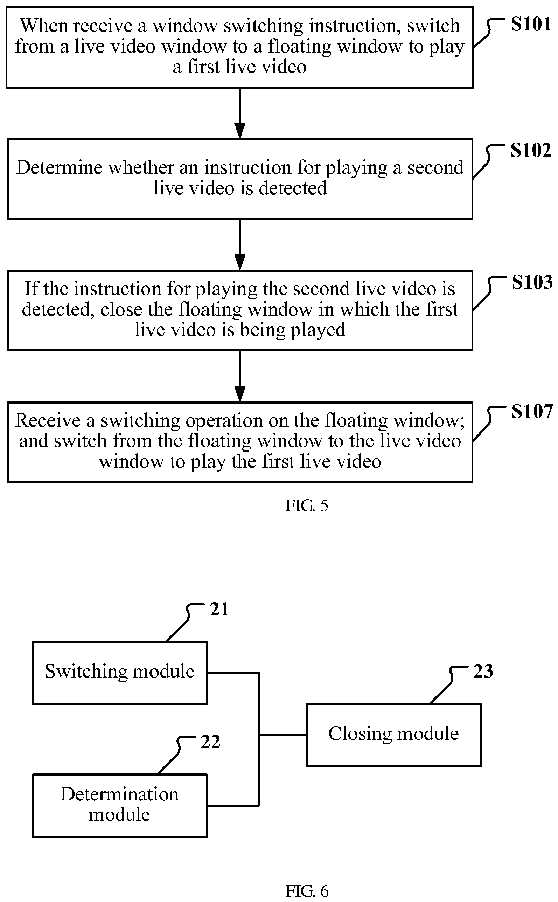

In an embodiment, as shown in FIG. 5, the above method for playing live video can further include the following steps.

In S107, switching operation on the floating window is received, and switching from the floating window to the live video window is performed to play the first live video.

During the playing of the first live video, if the user clicks the floating window, the floating window is closed and the first live video is played in the live video window. That is, the user can close the floating window at any time by clicking or other switching manners, and thereby switch to the live video window to view the video.

The above embodiments of the present disclosure switch playing of a live video to a floating window, and the playing of the live video in the current floating window stops only if a user selects to play another live video. Thus, while viewing the live video in the floating window, the user can perform other operations irrelevant to the live video on a page outside the floating window, and thus user experience is greatly improved.

FIG. 6 is a block diagram of a device for playing live videos according to an exemplary embodiment. As shown in FIG. 6, the device can include a switching module 21, a determination module 22 and a closing module 23.

The switching module 21 is configured to, when a window switching instruction is received, switch from a live video window to a floating window to play a first live video.

The determination module 22 is configured to determine whether an instruction for playing a second live video is detected.

The closing module 23 is configured to, on the condition that the instruction for playing the second live video is detected, close the floating window in which the first live video is being played.

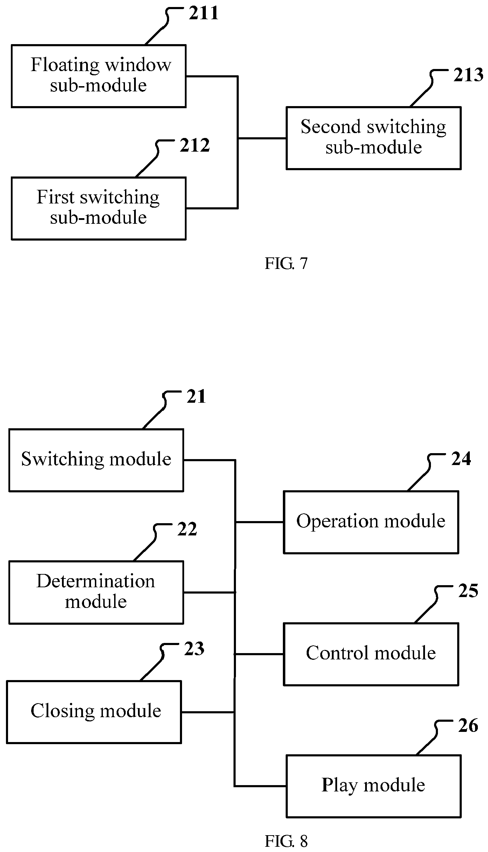

In an embodiment, as shown in FIG. 7, the switching module 21 can include a floating window sub-module 211.

The floating window sub-module 211 is configured to set an area of the floating window as smaller than an area of the live video window.

In an embodiment, as shown in FIG. 7, the switching module 21 can include a first switching sub-module 212.

The first switching sub-module 212 is configured to receive a switching operation on the floating window, and switch from the floating window to the live video window to play the first live video.

In an embodiment, as shown in FIG. 7, the switching module 21 can include a second switching sub-module 213.

The second switching sub-module 213 is configured to, when the window switching instruction is received, switch from the live video window which is a full-screen window to the floating window to play the first live video.

In an embodiment, as shown in FIG. 8, the device can further include an operation module 24.

The operation module 24 is configured to set an operation interface on an area which is not covered by the floating window.

In an embodiment, as shown in FIG. 8, the above device can further include a control module 25.

The control module 25 is configured to control the floating window to move within a preset area.

In an embodiment, as shown in FIG. 8, the device can further include a play module 26.

The play module 26 is configured to play the second live video in the live video window.

The technical solutions of the present disclosure switch playing of a live video to a floating window to play the live video, and the playing of the live video in the current floating window stops only if a user selects to play another live video. Thus, while viewing the live video in the floating window, the user can perform other operations irrelevant to the live video on a page outside the floating window, and thus user experience is greatly improved.

With respect to the devices in the above embodiments, the specific manners for performing operations by individual modules have been described in detail in the embodiments regarding the methods, which will not be elaborated herein.

An embodiment of the present disclosure further provides a non-transitory computer-readable storage medium. When the instructions in the storage medium is performed by a processor of a terminal, the terminal can perform a method for playing live videos, including:
when receiving a window switching instruction, switching from a live video window to a floating window to play a first live video;
determining whether an instruction for playing a second live video is detected; and
on the condition that the instruction for playing the second live video is detected, closing the floating window in which the first live video is being played.

An area of the floating window is smaller than an area of the live video window.

The method further includes:
setting an operation interface on an area which is not covered by the floating window.

The method further includes:
controlling the floating window to move within a preset area.

After the floating window is closed, the method further includes:
playing the second live video in the live video window.

The method further includes:
receiving a switching operation on the floating window; and
switching from the floating window to the live video window to play the first live video.

The live video window is a full-screen live video window. When the window switching instruction is received, playing of the first live video is switched from the full-screen live video window to the floating window.

An embodiment of the present disclosure provides a device for playing live videos, including:
a processor; and
a memory for storing instructions executable by the processor;
wherein the processor is configured to:
when receiving a window switching instruction, switch from a live video window to a floating window to play a first live video;
determine whether an instruction for playing a second live video is detected; and
on the condition that the instruction for playing the second live video is detected, close the floating window in which the first live video is being played.

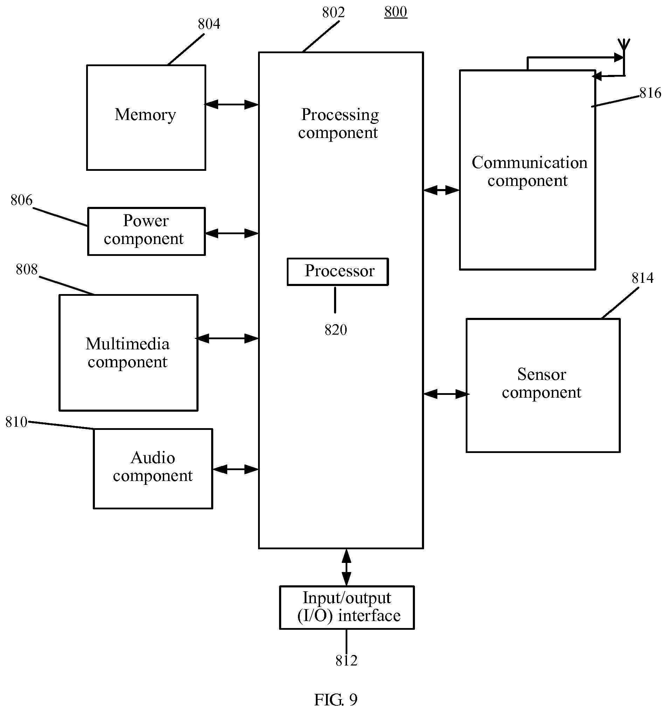

FIG. 9 is a block diagram of a device 800 for playing live videos according to an exemplary embodiment. For example, the device 800 may be a camera device such as a mobile phone having a camera function, a computer, a digital broadcast terminal, a messaging device, a gaming console, a tablet, a medical device, exercise equipment, a personal digital assistant, and the like.

Referring to FIG. 9, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 804 including instructions executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

Other embodiments of the application will be apparent to those skilled in the art from consideration of the specification and practice of the application disclosed here. This application is intended to cover any variations, uses, or adaptations of the application following the general principles thereof and including such departures from the present disclosure as come within known or customary practice in the art. It is intended that the specification and examples be considered as exemplary only, with a true scope of the application being indicated by the following claims.

It will be appreciated that the present application is not limited to the exact construction that has been described above and illustrated in the accompanying drawings, and that various modifications and changes can be made without departing from the scope thereof. It is intended that the scope of the application should only be limited by the appended claims.

## Claims

1. A method for playing live videos, comprising:
when receiving a window switching instruction, switching (S101) from a live video window to a floating window to play a first live video;
determining (S102) whether an instruction for playing a second live video is detected; and
on the condition that the instruction for playing the second live video is detected, closing (S103) the floating window in which the first live video is being played.

2. The method of claim 1, wherein an area of the floating window is smaller than an area of the live video window.

3. The method of claim 2, further comprising:
setting (S104) an operation interface on an area which is not covered by the floating window.

4. The method of any one of claims 1 to 3, further comprising:
controlling (S105) the floating window to move within a preset area.

5. The method of any one of claim 1 to 4, wherein after the floating window is closed, the method further comprises:
playing (S106) the second live video in the live video window.

6. The method of any one of claims 1 to 5, further comprising:
receiving (S107) a switching operation on the floating window; and
switching from the floating window to the live video window to play the first live video.

7. The method of any one of claims 1 to 6, wherein the live video window is a full-screen live video window.

8. A device for playing live videos, comprising:
a switching module (21) configured to, when a window switching instruction is received, switch from a live video window to a floating window to play a first live video;
a determination module (22) configured to determine whether an instruction for playing a second live video is detected; and
a closing module (23) configured to, on the condition that the instruction for playing the second live video is detected, close the floating window in which the first live video is being played.

9. The device of claim 8, wherein the switching module (21) comprises:
a floating window sub-module (211) configured to set an area of the floating window as smaller than an area of the live video window.

10. The device of claim 9, further comprising:
an operation module (24) configured to set an operation interface on an area which is not covered by the floating window.

11. The device of any one of claims 8 to 10, further comprising:
a control module (25) configured to control the floating window to move within a preset area.

12. The device of any one of claims 8 to 11, further comprising:
a play module (26) configured to play the second live video in the live video window.

13. The device of any one of claims 8 to 12, wherein the switching module (21) comprises:
a first switching sub-module (212) configured to receive a switching operation on the floating window, and switch from the floating window to the live video window to play the first live video.

14. The device of any one of claims 8 to 13, wherein the switching module (21) comprises:
a second switching sub-module (213) configured to, when the window switching instruction is received, switch from the live video window which is a full-screen window to the floating window to play the first live video.

15. A computer program, which when executed on a processor, performs a method according to any one of claims 1 to 7.
